# EUROPEAN PATENT SPECIFICATION

(11) **EP 4 179 336 B1**
(45) Date of publication and mention of the grant of the patent: **23.10.2024**
(21) Application number: 20737447.1
(22) Date of filing: 08.07.2020
(51) Int. Cl.: G01N 35/00, G06F 3/01

(54) **LABORATORY AUTOMATION DEVICE WITH TRANSPARENT DISPLAY IN DOOR**
LABORAUTOMATISIERUNGSVORRICHTUNG MIT TRANSPARENTER ANZEIGE IN DER TÜR
DISPOSITIF D'AUTOMATISATION DE LABORATOIRE AVEC PORTE À AFFICHAGE TRANSPARENT

(43) Date of publication of application: 17.05.2023
(73) Proprietor: TECAN Trading AG, 8708 Männedorf (CH)
(72) Inventor: MINIACI, Ciro, 8057 Zürich (CH); STIEFEL, Maximilian, 8820 Wädenswil (CH); HÄLG, Werner, 8708 Männedorf (CH); LEBOUDEC, Ronan, 8050 Zürich (CH)
(74) Representative: Sykora & König Patentanwälte PartG mbB
(86) International application number: PCT/EP2020/069190
(87) International publication number: WO 2022/008044

(56) References cited:
- EP-A1- 2 762 889
- EP-B1- 2 762 889
- US-A1- 2015 105 877
- US-A1- 2016 202 757

## Description

### FIELD OF THE INVENTION

The invention relates to a laboratory automation device. Furthermore, the invention relates to a method, a computer program, a computer-readable medium and a controller for operating a laboratory automation device.

### BACKGROUND OF THE INVENTION

Laboratory automation devices are used for automating tasks of a laboratory assistant, which, for example, tests a patient for specific diseases. Usually, a sample of the patient's blood, urine, stool, etc. is taken and analysed by means of a biochemical procedure. Such a procedure consists in various operations like adding substances, incubating, separating, etc. and a measurement process which quantitatively or qualitatively measures the amount, presence or absence of a substance indicating the specific disease.

Specific laboratory automation devices comprise a workspace, which is enclosed by a housing with a door. Inside the housing, the reagents, which are accommodated in containers, may be processed with a pipetting arm, which may aspirate a liquid from one container and may dispense the liquid into another container. The door may be transparent, such that a person can view into the workspace, however, may shield unintentional access into the workspace.

A laboratory automation device may be connected with a controller, usually a PC, which, for example, performs the control of the pipetting arm. The state of various components inside the laboratory automation device and error messages may be displayed on a monitor of the PC. It may be that a schematic setup of the workspace based on graphical symbols is shown on the monitor. For checking the state of the laboratory automation device, a person has to look onto the monitor and has to identify, which component inside the workspace is related to the specific message and/or symbol on the monitor.

US 2015/105 877 A1, EP 2 762 889 A1 and US 2016/202 757 A1 describe laboratory automation devices with a housing for accessing a workspace inside the respective laboratory automation device, wherein the housing has a transparent door.

### DESCRIPTION OF THE INVENTION

It is an object of the invention to simplify the supervising of a laboratory automation device.

This object is achieved by the subject-matter of the independent claims. Further exemplary embodiments are evident from the dependent claims and the following description.

A first aspect of the invention relates to a laboratory automation device. In general, a laboratory automation device may be any device adapted for automatically performing tasks of a laboratory assistant. At least such a laboratory automation device comprises a pipetting arm, which is adapted for moving a robot pipette between different positions and for aspirating and ejecting of liquid at these positions. Additionally or alternatively, such a laboratory automation device comprises at least a gripper arm, which is adapted for moving a robot gripper between different positions and for removing objects from or placing objects to these positions The liquid may be aspirated from and ejected in cavities provided by liquid containers, which may be positioned on a worktable of the laboratory automation device. Such liquid containers may comprise at least one of a well, a sample tube, a microtiter plate and/or a reagent container, etc.

According to the invention, the laboratory automation device comprises a workspace with liquid containers and a pipetting arm for moving liquids between the liquid containers, a housing enclosing the workspace, a door of the housing for accessing the workspace, wherein the door comprises a transparent display for displaying information and for allowing a person to view into the workspace and a tracking sensor for tracking an eye position of the person.

With such an equipment, the laboratory automation device is adapted for directly displaying information on the door through which a person can view into the interior of the housing and in particular the workspace. Furthermore, the laboratory automation device is adapted for determining, towards which area inside the workspace the person is viewing. In such a way, the person can be optimally informed about procedures and errors inside the laboratory automation device.

The housing and the door may completely enclose the workspace. However, it also may be that solely access to the workspace from specific directions is restricted by the housing.

The transparent display may be an OLED or LCD display. Such types of displays may display information, texts and graphics on a transparent screen.

According to the invention, the laboratory automation device is adapted for: determining the eye position of the person from sensor data acquired with the tracking sensor; and displaying information for a notification area in the workspace on the transparent display, such that the information is displayed from a perspective of the person in front of the notification area. These steps may be controlled by a controller of the laboratory automation device, which may be a computing device and/or PC connected to the laboratory automation device. The controller may be an external device or may be included into the laboratory automation device and in particular into its housing. The pipetting arm, the tracking sensor and the transparent display may be connected for data communication with the controller.

The transparent display may be used for displaying an augmented reality application, which augments the workspace of the laboratory automation device. This augmented reality application may be executed in the controller. The perspective of the person may be defined by her or his eye position. From the eye position, it may be determined, which part of the transparent display is situated in front of the notification area. This part may define a display area, in which the information is displayed.

The information shown on the transparent display may be notifications and/or error messages related to specific objects/components in the workspace. The augmented reality application may display the information near and/or above the corresponding component, with respect to the eye position of the person.

The information may comprise a symbolic indicator, which may be colored and/or flashing. The indicator may be an outline of the notification area.

The eye position may be provided as three-dimensional coordinate with respect to a coordinate system defined by the laboratory automation device.

According to an embodiment of the invention, the notification area is projected towards the eye position onto the transparent display. With the projection, a display area on the transparent display is determined, in which display area the information should be displayed. It may be that the laboratory automation device and/or its controller has an internal model of the current setup of the workspace. In particular, positions and optional types of components inside the workspace may be stored in the internal model. Such components may include liquid containers, other types of containers, such as pipette tip containers, test samples, the pipetting arm, etc. It may be that outer three-dimensional shapes of the components are stored together with the components. Such a shape may be determined from the type of component.

An internal model of the workspace, which may comprises positions and/or extensions of components in the workspace, already may be present, since the laboratory automation device may have to determine movements of the pipetting arm and gripper between such components. Furthermore, such an internal model may be generated in the context worktable recognition, where the laboratory automation device determines the content of the workspace with a sensor.

This specific shape of the component or more general a box or other general shape at the position of the component may be projected towards the eye position of the person onto the transparent display. This determines a display area, which seen from the person's perspective, lies in front of the component. When the information is shown in this display area, it is directly related to the component.

According to an embodiment of the invention, the notification area is an area, in which a component of the laboratory automation device is situated. For example, the information, which is displayed on the transparent display, is a status information of the component. The information may indicate on refilling a container, that too few pipetting tips are present and/or that a liquid container has too low content of liquid. The status information may be an error message. The status information may be a request to interact with the respective component in the workspace. It may be that the component is removable and that the information indicates that the component has to be removed.

It may be that the workspace is monitored by a camera or more general a sensor. By evaluating the sensor data, it may be determined, whether components are at the right position or not. When a component is at the wrong place, a corresponding error message is generated.

According to an embodiment of the invention, the notification area is an area, in which a component of the laboratory automation device is to be placed. In general, the notification area also may be an empty space of the workspace. The information, which is displayed on the transparent display, may be a status information of a component to be placed in the notification area. The information may indicate that a liquid container has to be placed into this area.

According to an embodiment of the invention, the tracking sensor comprises one or more cameras. The eye position may be estimated from a video stream. For example, a position and/or size of the head of a person may be extracted by extracting the face of the person from the video stream.

According to an embodiment of the invention, the tracking sensor comprises an eye tracking sensor. Such a sensor may comprise an infrared camera and infrared light sources, which are reflected from the person's eyes. With an eye tracking sensor, the view direction and the eye position may be estimated more exactly as with solely a video stream.

According to an embodiment of the invention, the tracking sensor is adapted for determining that more than one person is in its sensing area. For example, the persons, who are situated in front of the door and/or who are looking through the door, may be determined from a video stream. Such a video stream may be provided by a camera of the tracking sensor.

According to an embodiment of the invention, the person, for who the eye position is determined, is selected via gesture detection performed with sensor data of the tracking sensor. The video stream of the camera also may be used for gesture detection. There may be a gesture, such as waving a hand, which indicates that the person doing the gesture is the person, for whom the eye position should be determined and/or for who the augmented reality should be generated.

It also may be that, when more than one person are detected by the tracking sensor, the information is displayed without augmented reality features.

According to an embodiment of the invention, the person, for who the eye position is determined, is selected via the transparent display. The transparent display also may comprise a touchscreen. The transparent display may display a picture of the user group, which may be taken by the camera. The picture of the person to who the augmented reality with correct perspective is displayed may be touched on the transparent display, for selecting the respective person.

According to an embodiment of the invention, the door has a position sensor for determining a position of the door. The door may be a slidable door or a hinged door. There may be the positions "closed", "work bench accessible" and "completely opened". The position sensor also may be used for stopping the pipetting arm, when the door is opened and/or moved into a specific position.

According to an embodiment of the invention, a display area on the transparent display, in which the information is displayed, is determined in dependence of the position of the door. There may be several positions of the door, in which the person may view through the door into the workspace.

With the position sensor, two or more positions of the door may be detected, such as opened and closed. A three-dimensional model of the door and/or the transparent display together with its position and/or orientation may be stored in the controller. This model may be used for determining the projection of the notification area onto the transparent display. With the position sensor and/or the detected position of the door, the position of the door additionally may be taken into account for determining the projection.

According to an embodiment of the invention, the transparent display comprises a touchscreen. As already mentioned, the transparent display also may be used as user interface.

A further aspect of the invention relates to a method for operating a laboratory automation device as described in the above and the below. The method may be performed by the controller.

According to the invention, the method comprises: determining the eye position of the person from sensor data acquired with the tracking sensor; and displaying information for a notification area in the workspace on the transparent display, such that the information is displayed for the person in front of the notification area. It has to be understood that features of the method as described in the above and in the following may be features of the laboratory automation device as described in the above and in the following.

A further aspect of the invention relates to a computer program for a controller of a laboratory automation device, which, when being executed by a processor, is adapted for performing the method as described above and below. A further aspect of the invention relates to computer-readable medium, in which such a computer program is stored. The controller of the laboratory automation device may comprise a processor, which executes the computer program, which may be stored in a memory of the controller.

A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

A further aspect of the invention relates to a controller of a laboratory automation device (10) adapted for performing the method as described herein. The method may be implemented in hardware, such as an FPGA, at least partially.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 shows a schematic perspective view of a laboratory automation device according to an embodiment of the invention.
Fig. 2 shows a schematic cross-sectional view of a laboratory automation device according to a further embodiment of the invention.
Fig. 3A, 3B and 3C show schematic cross-sectional views of a laboratory automation device according to a further embodiment of the invention.
Fig. 4 shows a flow diagram illustrating a method for operating a laboratory automation device according to an embodiment of the invention.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

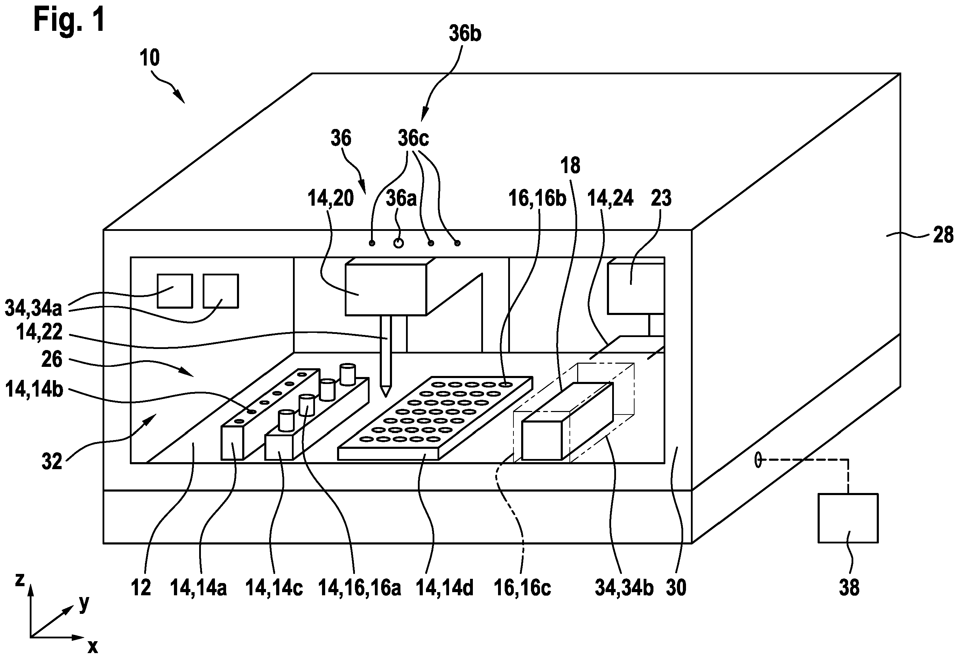

Fig. 1 shows a laboratory automation device 10, which comprises a workbench 12 onto which several components 14 of the laboratory automation device 10 are mounted. The shown examples include a cartridge 14a with pipette tips 14b, a cartridge 14c with test tubes 16a, a microplate 14d with wells 16b and a container 16c containing a reagent 18. In general, some of the components 14 may be liquid containers 16.

The laboratory automation device 10 further comprises a pipetting arm 20 with a pipette 22, which may be moved in three dimensions, for example with the aid of motors. A sample may be pipetted with the pipette 22 from the test tubes 16a, by being aspirated and may be dispensed into a well 16b. Analogously, the reagent 18 may be conveyed into the well 16b. With a gripper arm 23 equipped with grippers 24, the microplate 14d may be exchanged and moved into further devices, such as a heater, an optical analysis device, etc.

The components 14, 20, 22, 24 of the laboratory automation device 10 are arranged in a workspace 26 above the workbench 12, which is enclosed by a housing 28. At a front side, the housing 28 has a door 30, which can be opened for accessing the components 14, 20, 22, 24. A part of the door 30 or the complete door 30 is a transparent display 32, allowing to view into the workspace 26 and on which information 34 can be displayed. Such information may include symbols, text and images 34a and an outlining and/or highlighting 34b from components 14, 20, 22, 24.

Some or all of the information 34 may be displayed with respect to a specific viewing perspective of a person in front of the laboratory automation device 10, such that the information 34 is displayed near or in front of a component 14, 20, 22, 24 for the person.

In general, the information 34 may contain stationary information 34a, which is displayed on the same position on the transparent display 32 independently from the eye position of a person (and optionally independently from a position of the door 30). Furthermore, information 34 may contain augmented reality information 34b, which is displayed on the transparent display 32 at a position in dependence from the eye position of the person (and optionally dependent on a position of the door 30).

For example, the outlining and/or highlighting 34b of a component 14, 20, 22, 24 may be displayed, such that it overlays the area at which the component 14, 20, 22, 24 is arranged in the workspace.

For determining the eye position, the laboratory automation device 10 comprises a tracking sensor 36, which comprises a camera 36a and/or an eye tracking sensor 36b. For example, besides a camera 36a, an eye tracking sensor may comprise one or more infrared light sources 36c. The tracking sensor 36 and in particular the camera 36a and the infrared light sources 36c may be attached to the housing 28.

Fig. 1 furthermore shows a controller 38 of the laboratory automation device 10, which may perform determining the eye position and rendering the information 34 to be displayed on the transparent display 32. The controller 38 may be a computer or embedded device in data communication with the laboratory automation device 10 or may be included into the laboratory automation device 10.

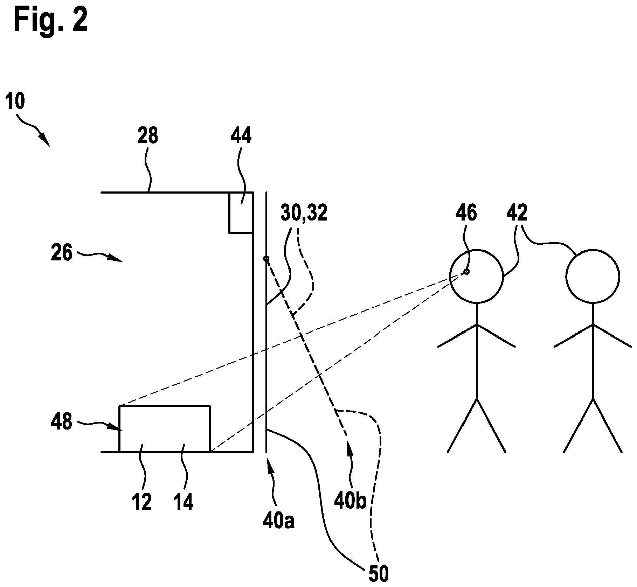

Fig. 2 shows an embodiment of a laboratory automation device 10 with a hinged door 30. The door 30 of the laboratory automation device 10 of Fig. 1 may be designed in such a way. The door 30 may be hinged about an axis A. In a first position 40a, the door 30 is closed and the door 30 prevents, that the workspace 26 is accessible through the opening, which is closed by the door 30. In a second position 40b, the door 30 is opened, such that a person 42 may view through the transparent display and may reach into the workspace 26, for example for exchanging a liquid container 16. There may be a further position, in which the door 30 is completely opened. The positions 40a, 40b of the door are determined with a position sensor 44.

The position sensor 44 may be used by the controller 38, for stopping the operation of the pipetting arm 20 and/or of the gripper 24, when the door 30 is not completely closed, i.e. is not in the position 40a.

Fig. 2 also illustrates, how the controller 38 determines a display area 50 of the information 34b. With the known eye position 46, a notification area 48 in the workspace is projected onto the transparent display 32. This projection is used as the display area 40, in which the information 34b is displayed. The notification area 48 may be a volume in the workspace 26. The display area 40 may be a twodimensional shape, such as a polygonal part of the display.

For performing the projection of a notification area 48, the controller 38 has to know the eye position 46 and the position of the transparent display 32. This position may be determined from the door position 40a, 40b or may be assumed to be constant.

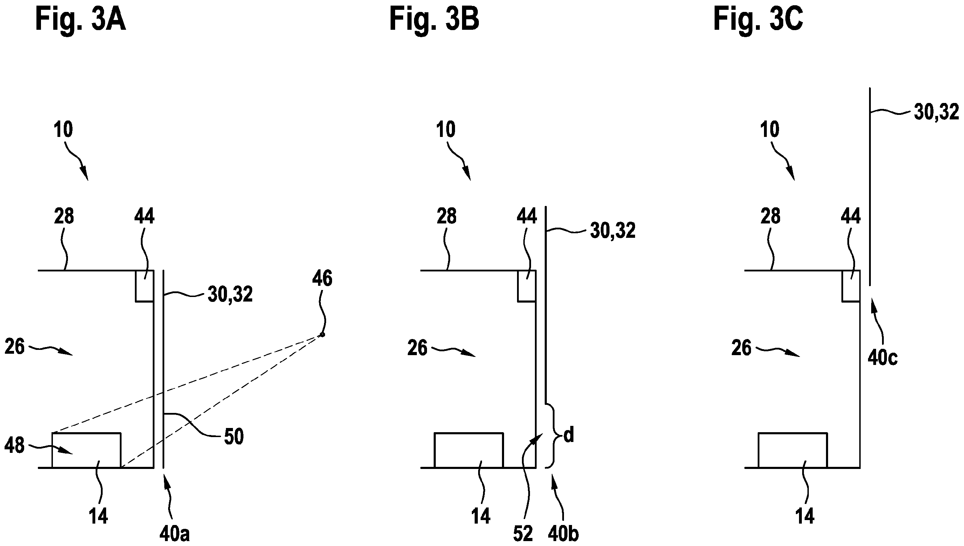

Fig. 3A, 3B and 3C show an embodiment of a laboratory automation device 10 with a sliding door 30. The door 30 of the laboratory automation device 10 of Fig. 1 may be designed in such a way. The sliding door 30 may prevent access to the workspace 26 in a first door position 40a (position "closed"), may allow access to the workspace 26 in a second door position 40b (position "work bench accessible"), and may allow access to the whole workspace 26 in a third door position 40c (position "completely opened"). Again, the display area 50 may be determined in dependence of the door position 40a, 40b. The sliding door may have different "work bench accessible" 40b positions varying in the height d of the assessing gap 52.

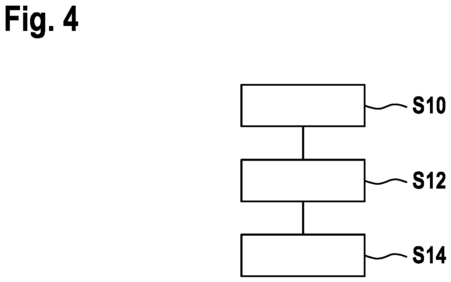

Fig. 4 shows a flow diagram for a method for operating a laboratory automation device 10, such as shown in the previous figures.

In step S10, when more than one person 42 are in front of the door 30, a person 42 is selected. The controller 38 may determine how many persons are in front of the door 30, by evaluating the video stream of the camera 36a. The camera 36a may be arranged, such that its field of view is directed to an area in front of the door 30, where persons 42 are to be expected. A person 42 or the head of a person may be identified with object recognition.

It may be that a person 42 is selected via gesture detection performed with sensor data of the tracking sensor 36 and in particular the camera 36a. For example, a waving arm or a specific gesture may be determined with object recognition of the hand and/or arm and tracking its position.

It also may be that the person 42 is selected via the transparent display 32. The heads and/or faces of all persons 42 in the field of view of the camera 36a may be displayed on the transparent display 32, for example as stationary information 34a. The transparent display 32 may comprise a touchscreen and the person may be selected by touching the area with the respective stationary information 34a.

In step S12, the eye position 46 of the person 42 is determined from sensor data acquired with the tracking sensor 36. For example, the eye position 46 may be extracted from the image of the head of the person selected in step S10 or from a single person in front of the door 30. The eye position 46 may be determined via object recognition in the video stream from the camera 36a. It also may be that the infrared light sources 36c are used, which are reflected from the eye and which reflections may be identified in the video stream.

The eye position 46 may be a three-dimensional coordinate that is provided with respect to a coordinate system, in which also positions of points inside the workspace 26 may be calculated and/or in which also the position of the transparent display 32 is known.

In step S14, augmented reality information 34b for a notification area 48 in the workspace 26 is displayed on the transparent display 32.

The controller 38 determines one or more notification areas 48, for which information 34b should be displayed. The notification area 48 may be an area, in which a component 14 of the laboratory automation device 10 is situated. The information 34b may be a status information of the component 14, such as an error message or a message for the person to exchange or refill the component 14.

It also may be that the notification area 48 is an empty area in the workspace 26. For example, an area in which a component 14 of the laboratory automation device 10 is to be placed by the person 42. The information 34b may be a status information of the component 14 to be placed.

The controller 38 may maintain an internal model of the workspace 26 and the components 14 inside. This model may provide information at which positions which components 14 are situated. The model also may provide information on a bounding volume of the components. Such bounding volumes may be used as notification area 48. The internal model may be updated, when a component 14 is put into the workspace 26 and removed from the workspace 26. The internal model may be updated, when a component 14 changes its place, for example due to the operation of the pipetting arm 20 and/or the gripper 24.

When the one or more notification areas 48 are determined, the notification areas 48 are projected towards the eye position 46 onto the transparent display 32 for determining a display area 50 on the transparent display 32. The transparent display 32 may be modelled as a rectangle, which position is determined by the position 40a, 40b, 40c of the door 30. The notification areas 48 may be projected onto this rectangle via central perspective with the eye position 46.

In the end, information 34b, which is shown in the respective display area 50, is rendered. The information 34b may comprise at least one of text, numbers, symbols, outlines, highlights, etc. It may be that the graphical information 34b is blinking or changes color to catch the interest of the person 42.

Due to the projection, the information 34b is displayed from a perspective of the person 42 in front of the notification area 48. In such a way, the person can identify easily, to which component 14 the information 34b belongs, in particular independently of the position 40a, 40b of the sliding door 30 (Fig. 3A-3C) or the opening angle of the hinged door 30 (Fig. 2).

Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: laboratory automation device
- 12: workbench
- 14: component
- 14a: cartridge
- 14b: pipette tips
- 14c: cartridge
- 14d: microplate
- 16: liquid container
- 16a: test tube
- 16b: well
- 16c: container
- 18: reagent
- 20: pipetting
- 22: pipette
- 23: gripper arm
- 24: gripper
- 26: workspace
- 28: housing
- 30: door
- 32: transparent display
- 34: information
- 34a: stationary information
- 34b: augmented reality information
- 36: tracking sensor
- 36a: camera
- 36b: eye tracking sensor
- 36c: infrared light sources
- 38: controller
- 40a: first door position
- 40b: second door position
- 40c: third door position
- 42: person
- 44: door position sensor
- 46: eye position
- 48: notification area
- 50: display area
- 52: assessing gap

## Claims

1. A laboratory automation device (10), comprising:
a workspace (26) with liquid containers (16) and a pipetting arm (20) for moving liquids (18) between the liquid containers (16);
a housing (28) enclosing the workspace (26);
a door (30) of the housing (28) for accessing the workspace (26), wherein the door (30) comprises a transparent display (32) for displaying information (34) and for allowing a person to view into the workspace (26);
**characterized in that** the device further comprises:
a tracking sensor (36) for tracking an eye position (46) of the person (42);
wherein the laboratory automation device (10) is adapted for:
determining the eye position (46) of the person (42) from sensor data acquired with the tracking sensor (36);
displaying information (34b) for a notification area (48) in the workspace (26) on the transparent display (32), such that the information (34b) is displayed from a perspective of the person (42) in front of the notification area (48), wherein the perspective of the person (42) is defined by the eye position (46).

2. The laboratory automation device (10) of the previous claim,
wherein the notification area (48) is projected towards the eye position (46) onto the transparent display (32) for determining a display area (50) on the transparent display (32), in which the information (34b) is displayed.

3. The laboratory automation device of one of the previous claims,
wherein the notification area (48) is an area, in which a component (14) of the laboratory automation device is situated;
wherein information (34b), which is displayed on the transparent display (32), is a status information of the component (14).

4. The laboratory automation device (10) of one of the previous claims,
wherein the notification area (48) is an area, in which a component (14) of the laboratory automation device (10) is to be placed;
wherein information (34b), which is displayed on the transparent display (32), is a status information of the component (14) to be placed.

5. The laboratory automation device (10) of one of the previous claims,
wherein the tracking sensor (36) comprises a camera (36a).

6. The laboratory automation device (10) of one of the previous claims,
wherein the tracking sensor (36) comprises an eye tracking sensor (36b).

7. The laboratory automation device (10) of one of the previous claims,
wherein the tracking sensor (36) is adapted for determining that more than one person (42) is in front of the door (30).

8. The laboratory automation (10) device of claim 7,
wherein the laboratory automation device (10) is adapted for selecting the person (42), for who the eye position (46) is determined, via gesture detection performed with sensor data of the tracking sensor.

9. The laboratory automation device (10) of claim 7 or 8,
wherein the person (42), for who the eye position (46) is determined, is selectable via the transparent display (32).

10. The laboratory automation device (10) of one of the previous claims,
wherein the door (30) has a position sensor (44) for determining a position (40a, 40b, 40c) of the door;
wherein a display area (50) on the transparent display (32), in which the information (34b) is displayed, is determined in dependence of the position (40a, 40b, 40c) of the door (30).

11. The laboratory automation device (10) of one of the previous claims,
wherein the transparent display (32) comprises a touchscreen.

12. A method for operating a laboratory automation device (10) according to one of the previous claims, the method comprising:
determining the eye position (46) of the person (42) from sensor data acquired with the tracking sensor (36);
displaying information (34b) for a notification area (48) in the workspace (26) on the transparent display (32), such that the information (34b) is displayed from a perspective of the person (42) in front of the notification area (48).

13. A computer program for a controller (38) of a laboratory automation device (10) claims 1 to 11, which, when being executed by a processor, cause the device of any of claims 1 to 11 to perform the method of claim 12.

14. A computer-readable medium, in which a computer program according to claim 13 is stored.

15. A controller (38) of a laboratory automation device (10) according to one of the claims 1 to 11, the controller (38) being adapted for performing the method of claim 12.

## Patentansprüche

1. Laborautomatisierungsvorrichtung (10), umfassend:
einen Arbeitsraum (26) mit Flüssigkeitsbehältern (16) und einem Pipettierarm (20) zum Bewegen von Flüssigkeiten (18) zwischen den Flüssigkeitsbehältern (16);
ein Gehäuse (28), das den Arbeitsraum (26) umschließt;
eine Tür (30) des Gehäuses (28) für den Zugang zu dem Arbeitsraum (26), wobei die Tür (30) eine transparente Anzeige (32) umfasst, um Informationen (34) anzuzeigen und einer Person den Blick in den Arbeitsraum (26) zu gestatten;
**dadurch gekennzeichnet, dass** die Vorrichtung des Weiteren umfasst:
einen Verfolgungssensor (36) zum Verfolgen einer Augenposition (46) der Person (42);
wobei die Laborautomatisierungsvorrichtung (10) ausgelegt ist zum:
Bestimmen der Augenposition (46) der Person (42) anhand von mit dem Verfolgungssensor (36) erfassten Sensordaten;
Anzeigen von Informationen (34b) für einen Benachrichtigungsbereich (48) in dem Arbeitsraum (26) auf der transparenten Anzeige (32) so, dass die Informationen (34b) aus einer Perspektive der Person (42) vor dem Benachrichtigungsbereich (48) angezeigt werden, wobei die Perspektive der Person (42) durch die Augenposition (46) definiert wird.

2. Laborautomatisierungsvorrichtung (10) nach dem vorangehenden Anspruch,
wobei der Benachrichtigungsbereich (48) in Richtung der Augenposition (46) auf die transparente Anzeige (32) projiziert wird, um einen Anzeigebereich (50) auf der transparenten Anzeige (32) zu bestimmen, in dem die Informationen (34b) angezeigt werden.

3. Laborautomatisierungsvorrichtung nach einem der vorangehenden Ansprüche,
wobei der Benachrichtigungsbereich (48) ein Bereich ist, in dem sich eine Komponente (14) der Laborautomatisierungseinrichtung befindet;
wobei Informationen (34b), die auf der transparenten Anzeige (32) angezeigt werden, Statusinformationen der Komponente (14) sind.

4. Laborautomatisierungsvorrichtung (10) nach einem der vorangehenden Ansprüche,
wobei der Benachrichtigungsbereich (48) ein Bereich ist, in dem eine Komponente (14) der Laborautomatisierungseinrichtung (10) zu platzieren ist;
wobei Informationen (34b), die auf der transparenten Anzeige (32) angezeigt werden, Statusinformationen der zu platzierenden Komponente (14) sind.

5. Laborautomatisierungsvorrichtung (10) nach einem der vorangehenden Ansprüche, wobei der Verfolgungssensor (36) eine Kamera (36a) umfasst.

6. Laborautomatisierungsvorrichtung (10) nach einem der vorangehenden Ansprüche, wobei der Verfolgungssensor (36) einen Augenverfolgungssensor (36b) umfasst.

7. Laborautomatisierungsvorrichtung (10) nach einem der vorangehenden Ansprüche, wobei der Verfolgungssensor (36) dafür ausgelegt ist zu bestimmen, dass sich mehr als eine Person (42) vor der Tür (30) befindet.

8. Laborautomatisierungsvorrichtung (10) nach Anspruch 7,
wobei die Laborautomatisierungsvorrichtung (10) dafür ausgelegt ist, die Person (42), für die die Augenposition (46) bestimmt wird, über eine mit Sensordaten des Verfolgungssensors durchgeführte Gestendetektion auszuwählen.

9. Laborautomatisierungsvorrichtung (10) nach Anspruch 7 oder 8,
wobei die Person (42), für die die Augenposition (46) bestimmt wird, über die transparente Anzeige (32) auswählbar ist.

10. Laborautomatisierungsvorrichtung (10) nach einem der vorangehenden Ansprüche,
wobei die Tür (30) einen Positionssensor (44) zum Bestimmen einer Position (40a, 40b, 40c) der Tür aufweist;
wobei ein Anzeigebereich (50) auf der transparenten Anzeige (32), in dem die Informationen (34b) angezeigt werden, in Abhängigkeit von der Position (40a, 40b, 40c) der Tür (30) bestimmt wird.

11. Laborautomatisierungsvorrichtung (10) nach einem der vorangehenden Ansprüche, wobei die transparente Anzeige (32) einen Touchscreen umfasst.

12. Verfahren zum Betreiben einer Laborautomatisierungsvorrichtung (10) nach einem der vorangehenden Ansprüche, wobei das Verfahren umfasst:
Bestimmen der Augenposition (46) der Person (42) anhand von mit dem Verfolgungssensor (36) erfassten Sensordaten;
Anzeigen von Informationen (34b) für einen Benachrichtigungsbereich (48) in dem Arbeitsraum (26) auf der transparenten Anzeige (32) so, dass die Informationen (34b) aus einer Perspektive der Person (42) vor dem Benachrichtigungsbereich (48) angezeigt werden.

13. Computerprogramm für einen Controller (38) einer Laborautomatisierungsvorrichtung (10), das, wenn es durch einen Prozessor ausgeführt wird, die Vorrichtung nach einem der Ansprüche 1 bis 11 veranlasst, das Verfahren nach Anspruch 12 durchzuführen.

14. Computerlesbares Medium, auf dem ein Computerprogramm nach Anspruch 13 gespeichert ist.

15. Controller (38) einer Laborautomatisierungsvorrichtung (10) nach einem der Ansprüche 1 bis 11, wobei der Controller (38) zum Durchführen des Verfahrens nach Anspruch 12 ausgelegt ist.

## Revendications

1. Dispositif d'automatisation de laboratoire (10), comprenant :
un espace de travail (26) avec des récipients de liquides (16) et un bras de pipetage (20) pour transférer des liquides (18) entre les récipients de liquide (16) ;
une enceinte (28) entourant l'espace de travail (26) ;
une porte (30) de l'enceinte (28) pour accéder à l'espace de travail (26), dans lequel la porte (30) comprend un affichage transparent (32) pour afficher des informations (34) et pour permettre à une personne de voir dans l'espace de travail (26) ;
**caractérisé en ce que** le dispositif comprend en outre :
un capteur de suivi (36) pour suivre une position des yeux (46) de la personne (42) ;
dans lequel le dispositif d'automatisation de laboratoire (10) est adapté pour :
déterminer la position des yeux (46) de la personne (42) à partir de données de capteur acquises avec le capteur de suivi (36) ;
afficher des informations (34b) pour une zone de notification (48) dans l'espace de travail (26) sur l'affichage transparent (32), de telle sorte que les informations (34b) sont affichées depuis une perspective de la personne (42) devant la zone de notification (48), dans lequel la perspective de la personne (42) est définie par la position des yeux (46).

2. Dispositif d'automatisation de laboratoire (10) selon la revendication précédente,
dans lequel la zone de notification (48) est projetée vers la position des yeux (46) sur l'affichage transparent (32) pour déterminer une zone d'affichage (50) sur l'affichage transparent (32), dans laquelle les informations (34b) sont affichées.

3. Dispositif d'automatisation de laboratoire selon l'une des revendications précédentes,
dans lequel la zone de notification (48) est une zone, dans laquelle un composant (14) du dispositif d'automatisation de laboratoire est situé ;
dans lequel des informations (34b), qui sont affichées sur l'affichage transparent (32), sont une information d'état du composant (14).

4. Dispositif d'automatisation de laboratoire (10) selon l'une des revendications précédentes,
dans lequel la zone de notification (48) est une zone, dans laquelle un composant (14) du dispositif d'automatisation de laboratoire (10) doit être placé ;
dans lequel des informations (34b), qui sont affichées sur l'affichage transparent (32), sont une information d'état du composant (14) à placer.

5. Dispositif d'automatisation de laboratoire (10) selon l'une des revendications précédentes,
dans lequel le capteur de suivi (36) comprend une caméra (36a) .

6. Dispositif d'automatisation de laboratoire (10) selon l'une des revendications précédentes,
dans lequel le capteur de suivi (36) comprend un capteur de suivi oculaire (36b).

7. Dispositif d'automatisation de laboratoire (10) selon l'une des revendications précédentes,
dans lequel le capteur de suivi (36) est adapté pour déterminer que plus d'une personne (42) est devant la porte (30) .

8. Dispositif d'automatisation de laboratoire (10) selon la revendication 7,
dans lequel le dispositif d'automatisation de laboratoire (10) est adapté pour sélectionner la personne (42), pour laquelle la position des yeux (46) est déterminée, via une détection gestuelle réalisée avec des données de capteur du capteur de suivi.

9. Dispositif d'automatisation de laboratoire (10) selon la revendication 7 ou 8,
dans lequel la personne (42), pour laquelle la position des yeux (46) est déterminée, peut être sélectionnée via l'affichage transparent (32).

10. Dispositif d'automatisation de laboratoire (10) selon l'une des revendications précédentes,
dans lequel la porte (30) a un capteur de position (44) pour déterminer une position (40a, 40b, 40c) de la porte ; dans lequel une zone d'affichage (50) sur l'affichage transparent (32), dans laquelle les informations (34b) sont affichées, est déterminée en fonction de la position (40a, 40b, 40c) de la porte (30).

11. Dispositif d'automatisation de laboratoire (10) selon l'une des revendications précédentes,
dans lequel l'affichage transparent (32) comprend un écran tactile.

12. Procédé pour faire fonctionner un dispositif d'automatisation de laboratoire (10) selon l'une des revendications précédentes, le procédé comprenant de :
déterminer la position des yeux (46) de la personne (42) à partir de données de capteur acquises avec le capteur de suivi (36) ;
afficher des informations (34b) pour une zone de notification (48) dans l'espace de travail (26) sur l'affichage transparent (32), de telle sorte que les informations (34b) sont affichées depuis une perspective de la personne (42) devant la zone de notification (48).

13. Programme informatique pour une commande (38) d'un dispositif d'automatisation de laboratoire (10) qui, lorsqu'il est exécuté par un processeur, amène le dispositif de l'une quelconque des revendications 1 à 11 à mettre en œuvre le procédé de la revendication 12.

14. Support lisible par ordinateur, dans lequel est stocké un programme informatique selon la revendication 13.

15. Commande (38) d'un dispositif d'automatisation de laboratoire (10) selon l'une des revendications 1 à 11, la commande (38) étant adaptée pour mettre en œuvre le procédé de la revendication 12.
